# EUROPÄISCHE PATENTSCHRIFT

(11) **EP 1 999 187 B1**
(45) Veröffentlichungstag und Bekanntmachung des Hinweises auf die Patenterteilung: **19.06.2013**
(21) Anmeldenummer: 07711537.6
(22) Anmeldetag: 15.02.2007
(51) Int. Cl.: C08G 77/04, C08G 77/26, C08K 5/5465, C08L 83/08, C09D 183/08, C09J 183/08

(54) **AZOMETHINVERBINDUNGEN ENTHALTENDES ADDITIV**
AZOMETHINE COMPOUND-CONTAINING ADDITIVE
ADDITIF CONTENANT DES COMPOSÉS D'AZOMÉTHINE

(30) Priorität: 17.03.2006 DE 102006012774
(43) Veröffentlichungstag der Anmeldung: 10.12.2008
(73) Patentinhaber: Construction Research & Technology GmbH, 83308 Trostberg (DE)
(72) Erfinder: MACK, Helmut, 83278 Traunstein (DE)
(74) Vertreter: Arlt, Klaus
(86) Internationale Anmeldenummer: PCT/EP2007/001304
(87) Internationale Veröffentlichungsnummer: WO 2007/107216

(56) Entgegenhaltungen:
- US-A- 4 378 250
- US-B1- 6 525 159

## Beschreibung

Die vorliegende Erfindung betrifft ein fließfähiges Additiv, ein Verfahren zur Herstellung dieses fließfähigen Additivs und die Verwendung des fließfähigen. Additivs.

Es sind zahlreiche Härter, Vernetzer und Haftvermittler bekannt, welche in Form von Zusätzen auf die zu härtenden bzw. abzubindenden Substrate, wie Polymeroberflächen, aufgetragen werden. In der Praxis sind insbesondere Zusätze gefragt, welche als Härter, Vernetzer und Haftvermittler für Polyurethane, Silikone, Acrylate, Polysulfide, silylierte Polymere (MS Polymer®, XMAP®, SPUR®, usw.) und epoxidhaltige Zubereitungen, wie Epoxidharze, epoxidierte Polysulfide, usw.Verwendung finden. Eine wichtige Gruppe derartiger Zusätze bilden Siloxan-Oligomere, z. B. Aminopropyl-funktionelle-Siloxan-Oligomere, welche in der DE-A-198 49 308 beschrieben sind. Weiterhin können auch, wie in der JP-B-7247295 erläutert, monomere Organosiliciumverbindungen mit Ketiminstruktur die Basis für derartige Zusätze bilden.

Die Aufgabe der vorliegenden Erfindung ist es, ein Additiv bereitzustellen, welches bezüglich der Handhabung (Kennzeichnung, Sensibilisierung, Gehalt an volatile organic compounds = VOC, Flammpunkt, usw.) und hinsichtlich der Wirksamkeit (Reaktivität, Filmbildung usw.) Vorteile gegenüber den bekannten, als Härter, Vernetzer und/oder Haftvermittler fungierenden, Organosiliciumverbindungen enthaltenden Zusätzen bietet.

Die Lösung dieser Aufgabe ist ein fließfähiges Additiv enthaltend
eine Si-aktivierbare, oligomere Azomethinsilankomponente A) und
eine Azomethinkomponente B)
in einem molaren Verhältnis von 100 : 0,1 bis 1 : 1 mit einem Anteil von in Summe > 5 Gew. %, wobei

die Si-aktivierbare, oligomere Azomethinsilankomponente A) durch Umsetzung eines (z.B. als Verbindung der Formel (CH₃O)₃Si-(CH₂)₃-NH₂ vorliegenden) Aminosilans c) der allgemeinen Formel

(I) R¹R²R³Si-(CH₂)ₙ-(CR⁴R⁵)-(CH₂)ₙ-NH-R⁶

mit
n = 0 oder 1;
R⁴ und R⁵ jeweils unabhängig voneinander = H oder C₁-C₄ n-Alkyl (insbesondere Methyl, Ethyl);
R¹ und R² jeweils unabhängig voneinander = Cl, OR⁷, C₁-C₁₈ n-Alkyl (insbesondere Methyl, Ethyl), C₅-C₈ Cycloalkyl (insbesondere Cyclohexyl) oder C₁-C₁₈ verzweigtes Alkyl (insbesondere iso-Propyl);
R³ = Cl oder OR⁷;
R⁷=C₁-C₆ n-Alkyl (insbesondere.Methyl, Ethyl), C₁-C₆ verzweigtes Alkyl (insbesondere iso-Propyl) oder Phenyl;
R⁶= H, CH₂-CH₂-NH₂ oder CH₂-CH₂-NH-CH₂-CH₂-NH₂
unter intermediärer (in situ) Bildung von Wasser und einer Si-aktivierbaren monomeren Azomethinsilankomponente mit einer (z.B. als sec.-Butylmethylketon, Ethylmethylketon oder Aceton vorliegenden) Carbonylverbindung d) der allgemeinen Formel

(II) R¹¹-CO-R¹²

mit
R¹¹ = C₁-C₃₀ n-Alkyl (insbesondere Methyl, Ethyl), C₁-C₃₀ verzweigtes Alkyl (insbesondere iso-Propyl), C₅-C₈ Cycloalkyl (insbesondere Cyclohexyl), C₆-C₁₈ Aryl (insbesondere Phenyl), C₁-C₃₀ Alkylaryl (insbesondere Toluyl) oder H;
R¹² = C₁-C₃₀ n-Alkyl (insbesondere Methyl, Ethyl), C₁-C₃₀ verzweigtes Alkyl (insbesondere iso-Propyl), C₅-C₈ Cycloalkyl (insbesondere Cyclohexyl), C₆-C₁₈ Aryl (insbesondere Phenyl) oder C₁-C₃₀ Alkylaryl (insbesondere Toluyl);
oder durch R¹¹ und R¹² zusammen mit dem R¹¹ und R¹² bindenden C-Atom gemeinsam ausgebildete cyclische C₅-C₈ Alkylgruppe (insbesondere Cyclopentyl- oder Cyclohexylgruppe)
unter der Maßgabe herstellbar ist, dass pro Mol eingesetztes Aminosilan c) 0,6 bis 1,2 Mol (normalerweise 0,6 bis 1 Mol) des intermediär gebildeten Wassers für die Wasser als Reaktionskomponente verbrauchende Oligomerisierung der intermediär entstandenen Si-aktivierbaren monomeren Azomethinsilankomponente zur Verfügung stehen und
die (z.B. als Verbindung der Formel (CH₃)₂C=N-(CH₂-)₆N=C(CH₃)₂ vorliegende) Azomethinkomponente B) durch folgende allgemeine Formel

(III) X-N=CR²¹R²²

mit
R²¹ = C₁-C₃₀ n-Alkyl (insbesondere Methyl, Ethyl), C₁-C₃₀ verzweigtes Alkyl (insbesondere iso-Propyl), C₅-C₈ Cycloalkyl (insbesondere Cyclohexyl), C₆-C₁₈ Aryl (insbesondere Phenyl), C₁-C₃₀ Alkylaryl (insbesondere Toluyl) oder H; R²² = C₁-C₃₀ n-Alkyl (insbesondere Methyl, Ethyl), C₁-C₃₀ verzweigtes Alkyl (insbesondere iso-Propyl), C₅-C₈ Cycloalkyl (insbesondere Cyclohexyl), C₆-C₁₈ Aryl (insbesondere Phenyl) oder C₁-C₃₀ Alkylaryl (insbesondere Toluyl);
oder durch R²¹ und R²² zusammen mit dem R²¹ und R²² bindenden C-Atom gemeinsam ausgebildete cyclische C₅-C₈ Alkylgruppe (insbesondere Cyclopentyl- oder Cyclohexylgruppe);
X = C₁-C₁₈ n-Alkyl- (insbesondere C₁-C₆ n-Alkyl, z. B. n-Hexyl), C₅-C₈ Cycloalkyl- (insbesondere Cyclohexyl) oder C₁-C₁₈ verzweigte Alkylgruppe (bevorzugt C₁-C₆ Alkylgruppe, z. B. iso-Propylgruppe), O und/oder N als Heteroatome aufweisende C₁-C₁₈ n-Alkyl (insbesondere CH₂-CH₂-NH-CH₂-CH₃, CH₂-CH₂-O-CH₂-CH₃), O und/oder N als Heteroatome aufweisende C₅-C₈ Cycloalkyl (insbesondere Pyrrolidin-Rest, Piperidin-Rest) oder O und/oder N als Heteroatome aufweisende C₁-C₁₈ verzweigte Alkylgruppe (bevorzugt -CH₂-NH-CH(CH₃)₂, - CH₂-O-CH(CH₃)₂) mit jeweils 0 bis 3 gleichartigen oder verschiedenartigen -N=CR²¹R²² Substituenten
beschrieben wird.

Unter einem fließfähigen Additiv soll im weitesten Sinne jedes Additiv verstanden werden, welches eine Viskosität aufweist, die hinreichend niedrig ist, dass das Additiv auf eine Oberfläche auftragbar ist.

Si-aktivierbar bedeutet, dass die jeweilige Verbindung mindestens ein Siliziumatom aufweist, an welchem ein Wassermolekül angreifen kann, wodurch eine Oligomerisierung über eine Si-O-Si Brücke einhergeht. Normalerweise gewährleisten Chloro- und/oder Alkoxysubstituenten des Siliciumatoms die "Si-Aktivierbarkeit". Unter dem Oberbegriff "Azomethinkomponente" fallen "Ketiminverbindungen" und "Aldiminverbindungen".

Die eingesetzten Aminosilane können insbesondere folgendermaßen hergestellt werden:

### Herstellungsvariante i)

Allylchlorid (Cl-CH₂-CH=CH₂) wird in einem ersten Schritt mit Trichlorsilan (HSiCl₃) zu 3-Chlorpropyltrichlorsilan (Cl-CH₂-CH₂-CH₂-SiCl₃) umgesetzt. Das 3-Chlorpropyltrichlorsilan wird danach zum 3-Chlorpropyltrialkoxysilan (Cl-CH₂-CH₂-CH₂-Si(OR)₃) verestert, welches schließlich mit Ammoniak umgesetzt (nukleophile Substitution) wird, wodurch das Aminosilan H₂N-(CH₂)₃-Si(OR)₃ erhalten wird.

### Herstellungsvariante ii)

Acrylnitril (NC-CH=CH₂) wird mit Trichlorsilan zu NC-CH₂-CH₂-SiCl₃ umgesetzt. Das erhaltene Produkt wird zum NC-CH₂-CH₂-Si(OR)₃ verestert. Durch nachfolgende Hydrierung wird schließlich H₂N-(CH₂)₃-Si(OR)₃ erhalten.

Bei der Umsetzung des Aminosilans c) (z.B. 3-Aminopropyltriethoxysilan - käuflich unter den Handelsnamen Dynasylan® AMEO (Degussa AG) bzw. Silquest® A-1100 (GE)) mit der Carbonylverbindung d) entsteht in einem ersten Reaktionsschritt unter Abspaltung von Wasser eine Silicium-aktivierbare monomere Azomethinsilankomponente (ein blockiertes Aminosilan). Letztere reagiert als eine Art (in situ) Zwischenprodukt mit dem im ersten Reaktionsschritt abgespaltenen Wasser unter Si-O-Si Brücken ausgebildender Oligomerisierung. Der zugrundeliegende Reaktionsmechanismus sei anhand des nachstehenden Beispiels erläutert:
Schritt 1 - Blockierung der Amingruppe

   (CH₃O)₃Si-(CH₂)₃-NH₂ + CH₃-CO-CH₃ → (CH₃O)₃Si-(CH₂)₃-N-C(CH₃)₂ + H₂O Aminosilan c) Carbonylverbindung d) Si-aktivierbare, monomere Azomethinsilankomponente
Schritt 2 - Oligomerisierung

   2(CH₃O)₃Si(CH₂)₃-N=C(CH₃)₂ + H₂O → (CH₃)₂C=N-(CH₂)₃-Si(OCH₃)₂-Si(OCH₃)₂-(CH₂)₃-N=C(CH₃)₂ + 2CH₃-OH

   Si-aktivierbare, oligomere (dimere) Azomethinsilankomponente A)
   ⇒ ggf. fortschreitende Oligomerisierung durch Reaktion mit dem in Schritt 1 intermediär gebildeten Wasser

Das Ausmaß der Oligomerisierung (bzw. der Polymerisierung) hängt unmittelbar mit der zur Verfügung stehenden Wassermenge ab - generell gilt: je mehr Wasser bereitsteht, desto höher der Oligomerisationsgrad (bzw. der Polymerisationsgrad). Erfindungsgemäß wird der Oligomerisationsgrad auf diese Weise eingestellt, dass pro Mol eingesetztes Aminosilan c) 0,6 bis 1,2 Mol (normalerweise 0,6 bis 1 Mol) des intermediär gebildeten Wassers für die Wasser als Reaktionskomponente verbrauchende Oligomerisierung der intermediär entstandenen Si-aktivierbaren monomeren Azomethinsilankomponente bereitgestellt wird. Die resultierenden Oligomere haben dann typischerweise einen mittleren Oligomerisationsgrad (Zahlenmittel) von ca. 2 bis 100 (bevorzugt ca. 2 bis 20). Falls (in einer nicht bevorzugten Ausführungsform) pro Mol eingesetztes Aminosilan c) entsprechend mehr als ein Mol (bis 1,2 Mol) Wasser bereitgestellt wird, bedeutet dies, daß normalerweise zusätzlich noch Wasser (neben dem intermediär gebildeten Wasser) bereitgestellt werden muß, was beispielsweise durch die Hinzugabe von (zusätzlichem) Wasser erreicht wird. Selbstverständlich hängt der Oligomerisationsgrad auch davon ab, wieviel Abgangsgruppen (also am Si gebundene Alkoxygruppen und/oder Chlorogruppen) das jeweils eingesetzte Aminosilan c) aufweist (am Si gebundene Alkylgruppen fungieren nicht als Abgangsgruppen). Durch den gezielten/ dosierten Einsatz von Mischungen verschiedener Spezies der Aminosilane c), welche jeweils eine unterschiedliche Anzahl an Abgangsgruppen (also 1 bis 3) aufweisen, kann somit der Oligomerisationsgrad ebenfalls in kontrollierter Weise beeinflußt werden. Es ist allgemein möglich, verschiedenartige Aminosilane c) einzusetzen.

Auch als Carbonylverbindung c) können Mischungen verschiedener Spezies eingesetzt werden. Der Einsatz von Formaldehyd als Carbonylverbindung c) ist aufgrund von Umwelt- und Toxizitätsgründen nicht vorgesehen.

Das erfindungsgemäße fließfähige Additiv ist in der Lage, entsprechende Substrate besonders gut zu benetzen, wodurch eine effektive Filmbildung auf den entsprechend behandelten Oberflächen gewährleistet wird. Aufgrund des verhältnismäßig hohen Anteils an Oligomeren enthält das fließfähige Additiv relativ wenig flüchtige Bestandteile. Es ist davon auszugehen, dass das Additiv als nicht sensibilisierend anzusehen ist. Die Si-aktivierbare, oligomere Azomethinsilankomponente A) (allgemein: Oligomere blockierte Aminosilane) genügt der OECD Polymerdefinition und muß daher nicht nachträglich in entsprechenden Registern (ELINCS) gelistet werden. Ein weiterer Vorteil des verhältnismäßig hohen Oligomeranteils besteht darin, dass das erfindungsgemäße Additiv einen relativ hohen Siedepunkt (in der Regel von 140 bis 280°C) und einen verhältnismäßig hohen Flammpunkt (meist von 90 bis 140°C) aufweist. Auch bezüglich der haftvermittelnden, vernetzenden und härtenden Eigenschaften zeigt das erfindungsgemäße fließfähige Additiv gute Resultate. Die Azomethinkomponente B) (das blockierte Amin) wird bei der Vernetzung im allgemeinen schneller deblockiert (unter dem Einfluss von zugegebenem Wasser) als vergleichsweise die Si-aktivierbare, oligomere Azomethinsilankomponente A), wodurch eine Art "Vorvernetzung" der mit dem fließfähigen Additiv behandelten, zu vernetzenden Oberfläche erreicht wird. Durch den Einsatz von Mischungen unterschiedlicher Spezies der Azomethinkomponente B können die Vernetzungseigenschaften modifiziert werden. In vielen Fällen werden durch besagte Vorvernetzung die mechanischen Eigenschaften des vernetzten Substrats verbessert. Die Azomethinkomponente B) bzw. dessen noch nicht blockiertes Aminvorprodukt sind meist verhältnismäßig preisgünstig und tragen somit an der guten Wirtschaftlichkeit des erfindungsgemäßen Additivs bei. Prinzipiell einsetzbar, jedoch nicht erfindungsgemäß vorgesehen, ist ein entsprechendes Additiv, welches die Si-aktivierbare, oligomere Azomethinsilankomponente A), jedoch nicht die Azomethinkomponente B, enthält.

In einer bevorzugten Ausführungsform der Erfindung, enthält das fließfähige Additiv zusätzlich noch eine (z.B. als Verbindung der Formel (CH₃)₃Si-CH₂-N=C(CH₃)₂ vorliegende) Si-inerte, monomere Azomethinsilankomponente E) in einem molaren Verhältnis zu der Si-aktivierbaren, oligomeren Azomethinsilankomponente A) von 1 : 99 bis 1 : 3, wobei die Si-inerte, monomere Azomethinsilanverbindung E) durch folgende allgemeine Formel

(IV) R³¹R³²R³³Si-(CH₂)ₘ-(CR³⁴R³⁵)-(CH₂)ₘ-(Y-)ₗN = CR⁴¹R⁴²

mit
m = 0 oder 1
R³⁴ und R³⁵ jeweils unabhängig voneinander = H oder C₁-C₄ n-Alkyl (insbesondere Methyl, Ethyl);
R³¹, R³² und R³³ jeweils unabhängig voneinander = C₁-C₁₈ n-Alkyl (insbesondere Methyl, Ethyl), C₅-C₈ Cycloalkyl (insbesondere Cyclohexyl) oder C₁-C₁₈ verzweigtes Alkyl (insbesondere iso-Propyl);
I = 0 bis 2;
Y = NH-CH₂-CH₂;
R⁴¹ = C₁-C₃₀ n-Alkyl (insbesondere Methyl, Ethyl), C₁-C₃₀ verzweigtes Alkyl (insbesondere iso-Propyl), C₅-C₈ Cycloalkyl (insbesondere Cyclohexyl), C₆-C₁₈ Aryl (insbesondere Phenyl), C₁-C₃₀ Alkylaryl (insbesondere Toluyl) oder H;
R⁴² = C₁-C₃₀ n-Alkyl (insbesondere Methyl, Ethyl), C₁-C₃₀ verzweigtes Alkyl (insbesondere iso-Propyl), C₅-C₈ Cycloalkyl (insbesondere Cyclohexyl), C₆-C₁₈ Aryl (insbesondere Phenyl) oder C₁-C₃₀ Alkylaryl (insbesondere Toluyl);
oder durch R⁴¹ und R⁴² zusammen mit dem R⁴¹ und R⁴² bindenden C-Atom gemeinsam ausgebildete cyclische C₅-C₈ Alkylgruppe (insbesondere Cyclopentyl- oder Cyclohexylgruppe)
beschrieben wird.

Diese Si-inerte, monomere Azomethinsilankomponente E) weist keine am Si gebundene Abgangsgruppen auf und kann somit nicht oligomerisieren. Es können auch Mischungen dieser Si-inerten, monomeren Azomethinsilankomponente E) eingesetzt werden.

Die Anwesenheit der monomere Azomethinsilankomponente E) (z.B. herstellbar durch Hydrierung von Trimethylsilylnitril (z.B. als Dynasylan® TMSCN der Degussa AG)) und anschließender Umsetzung mit einem Keton und/oder Aldehyd) in dem erfindungsgemäßen fließfähigen Additiv bewirkt eine Hydrophobisierung der mit dem Additiv behandelten Oberfläche. Die Wasserfestigkeit des Oberflächenfilms wird verbessert.

Normalerweise liegt die Si-aktivierbare, oligomere Azomethinsilankomponente A) und die Azomethinkomponente B) in einem molaren Verhältnis von 20 : 1 bis 4 : 1 vor.

Meist liegt die Si-aktivierbare, oligomere Azomethinsilankomponente A) und die Azomethinkomponente B) mit einem Anteil von in Summe größer 70 Gew.-% in dem fließfähigen Additiv vor. Falls das fließfähige Additiv keine Si-inerte, monomere Azomethinsilankomponente E) enthält, kann das fließfähige Additiv auch ausschließlich oder nahezu ausschließlich (d. h. zu über 98 Gew.-%) aus der Si-aktivierbaren, oligomeren Azomethinsilankomponente A) und der Azomethinkomponente B) bestehen.

Die Si-aktivierbare, oligomere Azomethinsilankomponente A) ist als wesentlicher Bestandteil des erfindungsgemäßen Additivs bezüglich ihrer Beschaffenheit in hohem Maße von den verfahrenstechnischen Details ihrer Herstellung abhängig. Somit ist es in der Regel zweckmäßig, bei der Herstellung der Si-aktivierbaren, oligomeren Azomethinsilankomponente A) das Aminosilan c) mit der Carbonylverbindung d) in einem molaren Verhältnis von 1 : 0,9 bis 0,9 : 1,0, bevorzugt jedoch äquimolar, einzusetzen.

Es hat sich als vorteilhaft herausgestellt, wenn pro eingesetztes Aminosilan c) 0,7 bis 0,9 Mol (besonders bevorzugt ca. 0,8 Mol) des intermediär gebildeten Wassers für die Wasser als Reaktionskomponente verbrauchende Oligomerisierung der intermediär entstandenen Si-aktivierbaren, monomeren Azomethinsilankomponente zur Verfügung stehen. Dies wird in der Praxis normalerweise dadurch erreicht, dass eine Teilmenge des intermediär bei der Umsetzung entstehenden Wassers, welche nicht für die Wasser als Reaktionskomponente verbrauchende Oligomerisierung der sich intermediär bildenden Si-aktivierbaren, monomeren Azomethinsilankomponente zur Verfügung zu stellen ist, so entfernt wird, dass diese nicht als Reaktionskomponente an der Oligomerisierung teilnimmt. Dies wird z. B. durch eine gezielte, dosierte Zugabe von Wasserfängern, wie Salze (z. B. Magnesiumsulfat), Zeolithe (z.B. Molekularsiebe), usw. erreicht. Ergänzend oder alternativ kann auch das überschüssige Wasser azeotrop aus dem Reaktionsgemisch abdestilliert werden. Bevorzugte Oligomerisationsgrade (Zahlenmittel), welche die Si-aktivierbare, oligomere Azomethinsilankomponente A) aufweist, sind ca. 2 bis 20 Si-Einheiten (z.B. Ketten und/oder Ringe).

Die Umsetzung des Aminosilans c) mit der Carbonylverbindung d) erfolgt in der Regel durch Erwärmen auf 10 bis 200°C, bevorzugt auf 80 bis 150°C.

Das erfindungsgemäße fließfähige Additiv kann so hergestellt werden, dass die Einzelkomponenten, die Si-aktivierbare, oligomere Azomethinsilankomponente A) und die Azomethinkomponente B), gegebenenfalls auch zusätzlich die Si-inerte, monomere Azomethinsilankomponente E) zusammengegeben werden, wobei diese Komponenten zuvor jeweils getrennt voneinander hergestellt worden sind. Bevorzugt ist jedoch, dass die Si-aktivierbare, oligomere Azomethinsilankomponente A) und die Azomethinkomponente B) zusammen in einem Reaktor hergestellt werden, indem das Aminosilan c) und eine (z.B. als Verbindung der Formel NH₂-(CH₂-)₆NH₂ vorlegende) Aminkomponente der allgemeinen Formel

(V) Z-NH₂

mit Z = C₁-C₁₈ n-Alkyl- (insbesondere C₁-C₆ n-Alkyl, z. B. n-Hexyl), C₅-C₈ Cycloalkyl- (insbesondere Cyclohexyl) oder C₁-C₁₈ verzweigte Alkylgruppe (bevorzugt C₁-C₆-Alkylgruppe, z. B. iso-Propylgruppe), O und/oder N als Heteroatome aufweisende C₁-C₁₈ n-Alkyl- (insbesondere CH₂-CH₂-NH-CH₂-CH₃, CH₂-CH₂-O-CH₂-CH₃), O und/oder N als Heteroatome aufweisende C₅-C₈ Cycloalkyl- (insbesondere Pyrrolidin-Rest, Piperidin-Rest) oder O und/oder N als Heteroatome aufweisende C₁-C₁₈ verzweigte Alkylgruppe (bevorzugt -CH₂-NH-CH(CH₃)₂ ; -CH₂-O-CH(CH₃)₂) mit jeweils 0 bis 3 primären Aminogruppen substituiert;
vorgelegt werden und mit der Carbonylverbindung d) umgesetzt werden.

Es können auch verschiedenartige Spezies der Aminkomponente der allgemeinen Formel (V) zugleich eingesetzt werden. Gegebenenfalls kann auch die Si-inerte, monomere Azomethinsilankomponente E), sofern diese in dem erfindungsgemäßen fließfähigen Additiv enthalten sein soll, auf entsprechende Weise zusammen mit den beiden zuvor genannten Komponenten A) und B) gemeinsam hergestellt werden. Dies wird dadurch erreicht, indem das entsprechende (noch) nicht blockierte Aminosilan-Vorprodukt der Si-inerten, monomeren Azomethinsilankomponente E) zu Beginn zusammen mit den besagten anderen (noch) nicht blockierten Amingruppen enthaltenden Ausgangsstoffen der Komponenten A) und B) vorgelegt wird und anschließend diese ("freie") Amingruppen enthaltenden Ausgangsstoffe von A), B) und C) gemeinsam entsprechend mit der Carbonylverbindung d) umgesetzt werden.

Falls die Si-aktivierbare, oligomere Azomethinsilankomponente A) und die Azomethinkomponente B), sowie gegebenenfalls zusätzlich die Si-inerte, monomere Azomethinsilankomponente E) zusammen in einem Reaktor hergestellt werden, gelten praktisch die gleichen verfahrenstechnischen Prinzipien und Vorgaben (insbesondere bezüglich Temperaturführung, sowie kontrollierter Wasserentfernung) wie vorstehend anhand der isolierten Herstellung der Si-aktivierbaren, oligomeren Azomethinsilankomponente A) erläutert.

Als weitere Komponente kann das erfindungsgemäße fließfähige Additiv noch Si-aktivierbare Alkyl- oder Arylsilane F) der allgemeinen Formel (VI) (beispielsweise n-Propyltrimethoxysilan) enhalten:

(VI) R⁵¹R⁵²R⁵³Si-R⁵⁴

mit
R⁵¹ und R⁵² jeweils unabhängig voneinander = Cl, OR⁵⁵, C₁-C₁₈ n-Alkyl (insbesondere Methyl, Ethyl), C₅-C₈ Cycloalkyl (insbesondere Cyclohexyl) oder C₁-C₁₈ verzweigtes Alkyl (insbesondere iso-Propyl);
R⁵³ = Cl oder OR⁵⁵;
R⁵⁵ =C₁-C₆ n-Alkyl (insbesondere Methyl, Ethyl), C₁-C₆ verzweigtes Alkyl (insbesondere iso-Propyl) oder Phenyl;
R⁵⁴ = C₁-C₃₀ n-Alkyl (bevorzugt C₁-C₁₀ n-Alkyl - insbesondere Methyl, Ethyl, n-Propyl), C₁-C₃₀ verzweigtes Alkyl (bevorzugt C₁-C₁₀ verzweigtes Alkyl - insbesondere iso-Propyl), C₅-C₈ Cycloalkyl (insbesondere Cyclohexyl), C₆-C₁₈ Aryl (insbesondere Phenyl) oder C₁-C₃₀ Alkylaryl (bevorzugt C₁-C₁₀ Alkylaryl - insbesondere Toluyl).

Diese Si-aktivierbaren Alkyl- oder Arylsilane F) fungieren praktisch als Wasserfänger, indem diese bei Anwesenheit von Wasser nach dem vorstehend beschriebenen Reaktionsprinzip ("Schritt 2 - Oligomerisierung") oligomerisieren. Normalerweise liegen die Si-aktivierbaren Alkyl- oder Arylsilane F) daher (wie die Si-aktivierbare, oligomere Azomethinsilankomponente A)) in dem erfindungsgemäßen Additiv als Oligomere vor - entweder als Homooligomere oder bevorzugt als Cooligomere, welche sowohl Struktureinheiten der Si-aktivierbaren, oligomeren Azomethinsilankomponente A) als auch der Si-aktivierbaren Alkyl- oder Arylsilane F) aufweisen. Die Si-aktivierbaren Alkyl - oder Arylsilane F) sind preisgünstig und verbessern somit insbesondere die Wirtschaftlichkeit des Additivs.

Das vorstehend beschriebene erfindungsgemäße fließfähige Additiv eignet sich als Haftvermittler und Vernetzer in Kleb- und Dichtstoffen, zur Modifizierung und Vernetzung organischer Harze, als Bindemittel in Farben und Lacken, zur Beschichtung von Glasfasern und Kohlefasern, als Haftvermittler in gefüllten thermoplastischen Compounds, für die Behandlung von mineralischen, organischen und metallischen Oberflächen, zur Hydrophobierung von Oberflächen, zur Oberflächenmodifizierung pulverförmiger Stoffe sowie zur Silanisierung von Füllstoffen und Pigmenten.

Im folgenden wird die Erfindung anhand von Beispielen näher erläutert.

### Vergleichsbeispiel 1 (Azomethinkomponente B) fehlt):

In einem 1 L-Rührreaktor aus Glas mit Vakuum-, Dosier- und Destillationseinrichtung werden 221 g 3-Aminopropyltriethoxysilan (Dynasylan® AMEO - Degussa AG) innerhalb von 20 Minuten in 200 g 4-Methyl-2-pentanon (Methylisobutylketon) versetzt mit 24 g wasserfreiem Magnesiumsulfat getropft und im Anschluß unter Rückfluß und Schutzgas (Stickstoff) für 180 Minuten bei 120°C zum Sieden erhitzt. Nach dem Abkühlen wird filtriert und die Leichtsieder werden abgezogen.

### Vergleichsbeispiel 2 (Azomethinkomponente B) fehlt):

In einem 1-L-Rührreaktor aus Glas mit Vakuum-, Dosier- und Destillationseinrichtung werden 179 g 3-Aminopropyltrimethoxysilan (Silquest® A-1110 - GE) und 15,2 g n-Propyltrimethoxysilan (Dynasylan® PTMO - Degussa AG) innerhalb von 20 Minuten in 200 g 4-Methyl-2-pentanon (Methylisobutylketon) getropft und im Anschluß unter Rückfluß und Schutzgas (Stickstoff) für 180 Minuten bei 120°C zum Sieden erhitzt. Nach dem Abkühlen wird filtriert und die Leichtsieder werden abgezogen.

### Beispiel 1 (gemäß Erfindung):

In einem 1-L-Rührreaktor aus Glas mit Vakuum-, Dosier- und Destillationseinrichtung werden 221 g 3-Aminopropyltriethoxysilan (Dynasylan® AMEO - Degussa AG) und 3 g Ethylendiamin (Aldrich) innerhalb von 20 Minuten in 205 g 4-Methyl-2-pentanon (Methylisobutylketon) versetzt mit 26 g wasserfreiem Magnesiumsulfat getropft und im Anschluß unter Rückfluß und Schutzgas (Stickstoff) für 180 Minuten bei 120°C zum Sieden erhitzt. Nach dem Abkühlen wird filtriert und die Leichtsieder werden abgezogen.

### Anwendungsbeispiel 1:

10 g D.E.R. 331 (ein flüssiges Bisphenol A-Epoxidharz der Dow Chemical), 90 g ST-67 (Hanse-Chemie) flüssiges silyliertes Polyurethan und 5 g Heloxy® Modifier 8 (Hexion) flüssiger aliphatischer Monoglycidylether werden bei Raumtemperatur in einem Speedmixer® der Firma Hausschild für ca. 30 Sekunden gemischt und mit je 10 g der Additive aus den Vergleichsbeispielen 1 und 2 sowie Beispiel 1 unter Feuchtigkeitsauschluß versetzt. Es wird ca. 30 Sekunden abschließend gemischt.

Von dem hergestellten Gemisch werden 200 µm dicke Filme auf eine Glasplatte aufgerakelt und bei 23 °C/ 50% rel. Feuchte vernetzt.

Alle drei Filme vernetzen - der Film gemäß Beispiel 1 jedoch schneller als jeweils die Filme gemäß der Vergleichsbeispiele 1 und 2. Die Oberflächen sind jeweils nahezu klebfrei.

### Anwendungsbeispiel 2:

5 Gew.% D.E.R. 331 (Dow Chemical), 1.Gew.% Polypox R 24 (UPPC AG) und 20 Gew.% ST-67 (Hanse-Chemie) werden mit 10 Gew.% PPG 3000 (Polypropylenglykol von Dow Chemical) und 0,7 Gew.-% Methylisobutylketon unter Vakuum 30 Minuten im Plantenmischer gemischt. Anschließend werden 20 Gew.% Socal U1S2 (gefällte Kreide der Solvay Chemicals GmbH), 31,95 Gew.% Omyacarb 2T- AV (gemalene Kreide der Omya International AG) und 0,8% Dynasylan VTMO (Vinyltrimethoxysilan der Degussa AG) 120 min. unter Vakuum dispergiert. Abschließend werden 9,25 Gew.% der Additive aus den Vergleichsbeispielen 1 und 2 sowie Beispiel 1 unter Feuchtigkeitsausschluss, Dynasylan® GLYMO (3-Glycidylpropyltrimethoxysilan der Degussa AG) 0,8Gew.% und 0,5 Gew.% BNT-CAT 440 (Dibutyl-Zinn-Diketonat der BNT Chemicals GmbH) zugegeben und 30 min unter Vakuum dispergiert.

Von dem hergestellten Gemisch werden ca. 4 mm dicke Klebstoffschichten in eine Teflonform gegossen und bei Normklima 23 °C/ 50 % rel. Feuchte ausgehärtet.

Es wird jeweils ein 0,2 mm dicker Film aufgerakelt.

Alle drei Filme vernetzen - der Film gemäß Beispiel 1 jedoch schneller als jeweils die Filme gemäß der Vergleichsbeispiele 1 und 2. Die Oberflächen sind jeweils nahezu klebfrei.

## Patentansprüche

1. Fließfähiges Additiv enthaltend
eine Si-aktivierbare, oligomere Azomethinsilankomponente A) und eine Azomethinkomponente B)
in einem molaren Verhältnis von 100 : 0,1 bis 1 : 1 mit einem Anteil von in Summe > 5 Gew. %, wobei
die Si-aktivierbare, oligomere Azomethinsilankomponente A) durch Umsetzung eines Aminosilans c) der allgemeinen Formel
(I) R¹R²R³Si-(CH₂)ₙ-(CR⁴R⁵)-(CH₂)ₙ-NH-R⁶
mit
n = 0 oder 1;
R⁴ und R⁵ jeweils unabhängig voneinander = H oder C₁-C₄ n-Alkyl;
R¹ und R² jeweils unabhängig voneinander = Cl, OR⁷, C₁-C₁₈ n-Alkyl, C₅-C₈ Cycloalkyl oder C₁-C₁₈ verzweigtes Alkyl;
R³ = Cl oder OR⁷;
R⁷ = C₁-C₆ n-Alkyl, C₁-C₆ verzweigtes Alkyl oder Phenyl;
R⁶ = H, CH₂-CH₂-NH₂ oder CH₂-CH₂-NH-CH₂-CH₂-NH₂
unter intermediärer Bildung von Wasser und einer Si-aktivierbaren monomeren Azomethinsilankomponente mit einer Carbonylverbindung d) der allgemeinen Formel
(II) R¹¹-CO-R¹²
mit
R¹¹ = C₁-C₃₀ n-Alkyl, C₁-C₃₀ verzweigtes Alkyl, C₅-C₈ Cycloalkyl, C₆-C₁₈ Aryl, C₁-C₃₀ Alkylaryl oder H;
R¹² = C₁-C₃₀ n-Alkyl, C₁-C₃₀ verzweigtes Alkyl, C₅-C₈ Cycloalkyl, C₆-C₁₈ Aryl oder C₁-C₃₀ Alkylaryl;
oder durch R¹¹ und R¹² zusammen mit dem R¹¹ und R¹² bindenden C-Atom gemeinsam ausgebildete cyclische C₅-C₈ Alkylgruppe
unter der Maßgabe herstellbar ist, dass pro Mol eingesetztes Aminosilan c) 0,6 bis 1,2 Mol des intermediär gebildeten Wassers für die Wasser als Reaktionskomponente verbrauchende Oligomerisierung der intermediär entstandenen Si-aktivierbaren monomeren Azomethinsilankomponente zur Verfügung stehen und
die Azomethinkomponente B) durch folgende allgemeine Formel
(III) X-N=CR²¹R²²
mit
R²¹ = C₁-C₃₀ n-Alkyl, C₁-C₃₀ verzweigtes Alkyl, C₅-C₈ Cycloalkyl, C₆-C₁₈ Aryl, C₁-C₃₀ Alkylaryl oder H;
R²² = C₁-C₃₀ n-Alkyl, C₁-C₃₀ verzweigtes Alkyl, C₅-C₈ Cycloalkyl, C₆-C₁₈ Aryl oder C₁-C₃₀ Alkylaryl;
oder durch R²¹ und R²² zusammen mit dem R²¹ und R²² bindenden C-Atom gemeinsam ausgebildete cyclische C₅-C₈ Alkylgruppe;
X = C₁-C₁₈ n-Alkyl-, C₅-C₈ Cycloalkyl- oder C₁-C₁₈ verzweigte Alkylgruppe, O und/oder N als Heteroatome aufweisende C₁-C₁₈ n-Alkyl-, O und/oder N als Heteroatome aufweisende C₅-C₈ Cycloalkyl- oder O und/oder N als Heteroatome aufweisende C₁-C₁₈ verzweigte Alkylgruppe mit jeweils 0 bis 3 gleichartigen oder verschiedenartigen -N=CR²¹R²² Substituenten
beschrieben wird.

2. Fließfähiges Additiv nach Anspruch 1, enthaltend eine Si-inerte, monomere Azomethinsilankomponente E) in einem molaren Verhältnis zu der Si-aktivierbaren, oligomeren Azomethinsilankomponente A) von 1 : 99 bis 1 : 3, wobei die Si-inerte, monomere Azomethinsilanverbindung E) durch folgende allgemeine Formel
(IV) R³¹R³²R³³Si-(CH₂)ₘ-(CR³⁴R³¹)-(CH₂)ₘ-(Y-)ₗN = CR⁴¹R⁴²
mit
m = 0 oder 1
R³⁴ und R³⁵ jeweils unabhängig voneinander = H oder C₁-C₄ n-Alkyl; R³¹, R³² und R³³ jeweils unabhängig voneinander = C₁-C₁₈ n-Alkyl, C₅-C₈ Cycloalkyl oder C₁-C₁₈ verzweigtes Alkyl;
I = 0 bis 2;
Y = NH-CH₂-CH₂;
R⁴¹ = C₁-C₃₀ n-Alkyl, C₁-C₃₀ verzweigtes Alkyl, C₅-C₈ Cycloalkyl, C₆-C₁₈ Aryl, C₁-C₃₀ Alkylaryl oder H;
R⁴² = C₁-C₃₀ n-Alkyl, C₁-C₃₀ verzweigtes Alkyl, C₅-C₈ Cycloalkyl, C₆-C₁₈ Aryl oder C₁-C₃₀ Alkylaryl;
oder durch R⁴¹ und R⁴² zusammen mit dem R⁴¹ und R⁴² bindenden C-Atom gemeinsam ausgebildete cyclische C₅-C₈ Alkylgruppe
beschrieben wird.

3. Fließfähiges Additiv nach Anspruch 1 oder 2, **dadurch gekennzeichnet, dass** das Aminosilan c) mit der Carbonylverbindung d) in einem molaren Verhältnis von 1 : 0,9 bis 0,9 : 1, bevorzugt im äquimolaren Verhältnis, umgesetzt wird.

4. Fließfähiges Additiv nach einem der Ansprüche 1 bis 3, **dadurch gekennzeichnet, dass** die Si-aktivierbare, oligomere Azomethinsilankomponente A) und die Azomethinkomponente B) in einem molaren Verhältnis von 20 : 1 bis 4 : 1 vorliegen.

5. Fließfähiges Additiv nach einem der Ansprüche 1 bis 4, **dadurch gekennzeichnet, dass** die Si-aktivierbare, oligomere Azomethinsilankomponente A) und die Azomethinkomponente B) mit einem Anteil von in Summe > 70 Gew.-% vorliegen.

6. Fließfähiges Additiv nach einem der Ansprüche 1 bis 5, **dadurch gekennzeichnet, dass** pro eingesetztes Aminosilan c) 0,7 bis 0,9 Mol des intermediär gebildeten Wassers für die Wasser als Reaktionskomponente verbrauchende Oligomerisierung der intermediär entstandenen Si-aktivierbaren monomeren Azomethinsilankomponente zur Verfügung stehen.

7. Verfahren zur Herstellung eines fließfähigen Additivs gemäß einem der Ansprüche 1 bis 6, **dadurch gekennzeichnet, dass** die Si-aktivierbare, oligomere Azomethinsilankomponente A) und die Azomethinkomponente B) zusammen in einem Reaktor hergestellt werden, indem das Aminosilan c) und eine Aminkomponente der allgemeinen Formel
(V) Z-NH₂
mit Z = C₁-C₁₈ n-Alkyl-, C₅-C₈ Cycloalkyl- oder C₁-C₁₈ verzweigte Alkylgruppe, O und/oder N als Heteroatome aufweisende C₁-C₁₈ n-Alkyl-, O und/oder N als Heteroatome aufweisende C₅-C₈ Cycloalkyl- oder O und/oder N als Heteroatome aufweisende C₁-C₁₈ verzweigte Alkylgruppe mit jeweils 0 bis 3 primären Aminogruppen substituiert;
vorgelegt werden und mit der Carbonylverbindung d) umgesetzt werden.

8. Verfahren nach Anspruch 7, **dadurch gekennzeichnet, dass** die Umsetzung unter Erwärmen auf 10 bis 200 °C, bevorzugt auf 80 - 150 °C durchgeführt wird.

9. Verfahren nach einem der Ansprüche 7 oder 8, **dadurch gekennzeichnet, dass** eine Teilmenge des intermediär bei der Umsetzung entstehenden Wassers, welche nicht für die Wasser als Reaktionskomponente verbrauchende Oligomerisierung der sich intermediär bildenden Si-aktivierbaren monomeren Azomethinsilankomponente zur Verfügung zu stellen ist, so entfernt wird, dass diese Teilmenge nicht als Reaktionskomponente an der Oligomerisierung teilnimmt.

10. Verwendung eines fließfähigen Additivs nach einem der Ansprüche 1 bis 6, als Haftvermittler und Vernetzer in Kleb- und Dichtstoffen, zur Modifizierung und Vernetzung organischer Harze, als Bindemittel in Farben und Lacken, zur Beschichtung von Glasfasern und Kohlefasern, als Haftvermittler in gefüllten thermoplastischen Compounds, für die Behandlung von mineralischen, organischen und metallischen Oberflächen, zur Hydrophobierung von Oberflächen, zur Oberflächenmodifizierung pulverförmiger Stoffe sowie zur Silanisierung von Füllstoffen und Pigmenten.

## Claims

1. Flowable additive comprising
an Si-activable, oligomeric azomethinesilane component A) and
an azomethine component B)
in a molar ratio of 100 : 0.1 to 1 : 1, with a fraction totalling > 5 % by weight,
the Si-activable, oligomeric azomethinesilane component A) being preparable by reacting an aminosilane c) of the general formula
(I) R¹R²Si-(CH₂)ₙ-(CR⁴R⁵)-(CH₂)ₙ-NH-R⁶
where
n = 0 or 1;
R⁴ and R⁵ each independently of one another = H or C₁-C₄ n-alkyl;
R¹ and R² each independently of one another = Cl, OR⁷, C₁-C₁₈ n-alkyl, C₅-C₈ cycloalkyl or C₁-C₁₈ branched alkyl;
R³ = Cl or OR⁷;
R⁷ = C₁-C₆ n-alkyl, C₁-C₆ branched alkyl or phenyl;
R⁶ = H, CH₂-CH₂-NH₂ or CH₂-CH₂-NH-CH₂-CH₂-NH₂,
with formation of water and an Si-activable monomeric azomethinesilane component as intermediates, with a carbonyl compound d) of the general formula
(II) R¹¹-CO-R¹²
where
R¹¹ = C₁-C₃₀ n-alkyl, C₁-C₃₀ branched alkyl, C₅-C₈ cycloalkyl, C₆-C₁₈ aryl, C₁-C₃₀ alkylaryl or H; R¹² = C₁-C₃₀ n-alkyl, C₁-C₃₀ branched alkyl, C₅-C₈ cycloalkyl, C₆-C₁₈ aryl or C₁-C₃₀ alkylaryl;
or cyclic C₅-C₈ alkyl group formed jointly by R¹¹ and R¹² together with the C atom connecting R¹¹ and R¹²,
with the proviso that per mole of aminosilane c) employed there are 0.6 to 1.2 mol of the water intermediate formed available for the oligomerization - which consumes water as a reaction component - of the Si-activable monomeric azomethinesilane component produced as intermediate, and
the azomethine component B) is described by the general formula
(III) X-N=CR²¹R²²
where
R²¹ = C₁-C₃₀ n-alkyl, C₁-C₃₀ branched alkyl, C₅-C₈ cycloalkyl, C₆-C₁₈ aryl, C₁-C₃₀ alkylaryl or H;
R²² = C₁-C₃₀ n-alkyl, C₁-C₃₀ branched alkyl, C₅-C₈ cycloalkyl, C₆-C₁₈ aryl or C₁-C₃₀ alkylaryl;
or cyclic C₅-C₈ alkyl group formed jointly by R²¹ and R²² together with the C atom connecting R²¹ and R²²;
X = C₁-C₁₈ n-alkyl, C₅-C₈ cycloalkyl or C₁-C₁₈ branched alkyl group, C₁-C₁₈ n-alkyl group containing O and/or N heteroatoms, C₅-C₈ cycloalkyl group containing O and/or N heteroatoms or C₁-C₁₈ branched alkyl group containing O and/or N heteroatoms, having in each case 0 to 3 alike or different -N=CR²¹R²² substituents.

2. Flowable additive according to Claim 1, comprising an Si-inert, monomeric azomethinesilane component E) in a molar ratio to the Si-activable, oligomeric azomethinesilane component A) of 1 : 99 to 1 : 3, the Si-inert, monomeric azomethinesilane compound E) being described by the general formula
(IV) R³¹R³²R³³Si-(CH₂)ₘ-(CR³⁴R³⁵)-CH₂)ₘ-(Y-)ₗN = CR⁴¹R⁴²
where
m = 0 or 1;
R³⁴ and R³⁵ each independently of one another = H or C₁-C₄ n-alkyl;
R³¹, R³² and R³³ each independently of one another = C₁-C₁₈ n-alkyl, C₅-C₈ cycloalkyl or C₁-C₁₈ branched alkyl;
l = 0 to 2;
Y = NH-CH₂-CH₂;
R⁴¹ = C₁-C₃₀ n-alkyl, C₁-C₃₀ branched alkyl, C₅-C₈ cycloalkyl, C₆-C₁₈ aryl, C₁-C₃₀ alkylaryl or H;
R⁴² = C₁-C₃₀ n-alkyl, C₁-C₃₀ branched alkyl, C₅-C₈ cycloalkyl, C₆-C₁₈ aryl or C₁-C₃₀ alkylaryl;
or cyclic C₅-C₈ alkyl group formed jointly by R⁴¹ and R⁴² together with the C atom connecting R⁴¹ and R⁴².

3. Flowable additive according to Claim 1 or 2, **characterized in that** the aminosilane c) is reacted with the carbonyl compound d) in a molar ratio of 1 : 0.9 to 0.9 : 1, preferably in an equimolar ratio.

4. Flowable additive according to any one of Claims 1 to 3, **characterized in that** the Si-activable, oligomeric azomethinesilane component A) and the azomethine component B) are present in a molar ratio of 20 : 1 to 4 : 1.

5. Flowable additive according to any one of Claims 1 to 4, **characterized in that** the Si-activable, oligomeric azomethinesilane component A) and the azomethine component B) are present with a fraction totalling > 70 % by weight.

6. Flowable additive according to any one of Claims 1 to 5, **characterized in that** per mol of aminosilane c) employed there is 0.7 to 0.9 mol of the water intermediate formed available for the oligomerization - which consumes water as a reaction component - of the Si-activable monomeric azomethinesilane component produced as intermediate.

7. Process for preparing a flowable additive according to any one of Claims 1 to 6, **characterized in that** the Si-activable, oligomeric azomethinesilane component A) and the azomethine component B) are prepared together in a reactor, by initially introducing the aminosilane c) and an amine component of the general formula
(V) Z-NH₂
with Z = C₁-C₁₈ n-alkyl, C₅-C₈, cycloalkyl or C₁-C₁₈ branched alkyl group, C₁-C₁₈ n-alkyl group containing O and/or N heteroatoms, C₅-C₈, cycloalkyl group containing O and/or N heteroatoms, or C₁-C₁₈ branched alkyl group containing O and/or N heteroatoms, substituted by in each case 0 to 3 primary amino groups
and reacting this initial charge with the carbonyl compound d).

8. Process according to Claim 7, **characterized in that** the reaction is carried out with heating at 10 to 200 °C, preferably at 80-150 °C.

9. Process according to either of Claims 7 and 8, **characterized in that** a portion of the water produced as an intermediate in the reaction, said portion not being intended to be made available for the oligomerization - which consumes water as a reaction component - of the Si-activable monomeric azomethinesilane component which forms as an intermediate, is removed in such a way that this portion does not take part as a reaction component in the oligomerization.

10. Use of a flowable additive according to any one of Claims 1 to 6 as an adhesion promoter and crosslinker in adhesives and sealants, for modifying and crosslinking organic resins, as a binder in paints and varnishes, for coating glass fibres and carbon fibres, as an adhesion promoter in filled thermoplastic compounds, for treating mineral, organic and metallic surfaces, for hydrophobicizing surfaces, for surface-modifying substances in powder form, and for silanizing fillers and pigments.

## Revendications

1. Additif pouvant s'écouler, contenant un composé d'azométhinesilane A) oligomère activable par Si et un composant d'azométhine B)
dans un rapport molaire de 100:0,1 à 1:1 en une proportion d'au total > 5% en poids
le composant d'azométhinesilane A) oligomère activable par Si pouvant être préparé par transformation d'un aminosilane c) de formule générale
(I) R¹R²R³Si-(CH₂)ₙ-(CR⁴R⁵)-(CH₂)ₙ-NH-R⁶
où
n = 0 ou 1 ;
R⁴ et R⁵ à chaque fois indépendamment l'un de l'autre = H ou C₁-C₄-n-alkyle,
R¹ et R² à chaque fois indépendamment l'un de l'autre = Cl, OR⁷, C₁-C₁₈-n-alkyle, C₅-C₈-cycloalkyle ou C₁-C₁₈-alkyle ramifié ;
R³ = Cl ou OR⁷ ;
R⁷ = C₁-C₆-n-alkyle, C₁-C₆-alkyle ramifié ou phényle ;
R⁶ = H, CH₂-CH₂-NH₂ ou CH₂-CH₂-NH-CH₂-CH₂-NH₂
avec formation intermédiaire d'eau et d'un composant d'azométhinesilane monomère activable par Si, avec un composé carbonyle d) de formule générale
(II) R¹¹-CO-R¹²
où
R¹¹ = C₁-C₃₀-n-alkyle, C₁-C₃₀-alkyle ramifié, C₅-C₈-cycloalkyle, C₆-C₁₈-aryle, C₁-C₃₀-alkylaryle ou H ;
R¹² = C₁-C₃₀-n-alkyle, C₁-C₃₀-alkyle ramifié, C₅-C₈-cycloalkyle, C₆-C₁₀-aryle ou C₁-C₃₀-alkylaryle ;
ou un groupe C₅-C₈-alkyle cyclique formé par R¹¹ et R¹² ensemble avec l'atome de carbone reliant R¹¹ et R¹² sous réserve qu'il existe, par mole d'aminosilane c) utilisé, 0,6 à 1,2 mole d'eau formée de manière intermédiaire pour l'oligomérisation, consommant l'eau en tant que composant de réaction, du composant d'azométhinesilane monomère activable par Si formé de manière intermédiaire et
le composant azométhine B) étant décrit par la formule générale suivante
(III) X-N=CR²¹R²²
où
R²¹ = C₁-C₃₀-n-alkyle, C₁-C₃₀-alkyle ramifié, C₅-C₈-cycloalkyle, C₆-C₁₈-aryle, C₁-C₃₀-alkylaryle ou H ;
R²² = C₁-C₃₀-n-alkyle, C₁-C₃₀-alkyle ramifié, C₅-C₈-cycloalkyle, C₆-C₁₈-aryle ou C₁-C₃₀-alkylaryle ;
ou un groupe C₅-C₈-alkyle cyclique formé par R²¹ et R²² ensemble avec l'atome de carbone reliant R²¹ et R²² X = un groupe C₁-C₁₈-n-alkyle, C₅-C₈-cycloalkyle ou C₁-C₁₈-alkyle ramifié, C₁-C₁₈-n-alkyle présentant O et/ou N en tant qu'hétéroatomes, C₅-C₈-cycloalkyle présentant O et/ou N en tant qu'hétéroatomes ou C₁-C₁₈-alkyle ramifié présentant O et/ou N en tant qu'hétéroatomes, comprenant à chaque fois 0 à 3 substituants -N=CR²¹R²² identiques ou différents.

2. Additif pouvant s'écouler selon la revendication 1,
contenant un composant d'azométhinesilane E) monomère inerte par rapport à Si, dans un rapport molaire par rapport au composant d'azométhinesilane A) oligomère activable par Si, dans 1:99 à 1:3, le composant d'azométhinesilane E) monomère inerte par rapport à Si étant décrit par la formule générale suivante
(IV) R³¹R³²R³³Si-(CH₂)ₘ-(CR³⁴R³⁵)-(CH₂)ₘ-(Y-)ₗN = CR⁴¹R⁴²
où
m = 0 ou 1
R³⁴ et R³⁵ à chaque fois indépendamment l'un de l'autre = H ou C₁-C₄-n-alkyle,
R³¹, R³² et R³³ à chaque fois indépendamment les uns des autres = C₁-C₁₈-n-alkyle, C₅-C₈-cycloalkyle ou C₁-C₁₈-alkyle ramifié ;
l = 0 à 2 ;
Y = NH-CH₂-CH₂ ;
R⁴¹ = C₁-C₃₀-n-alkyle, C₁-C₃₀-alkyle ramifié, C₅-C₈-cycloalkyle, C₆-C₁₈-aryle, C₁-C₃₀-alkylaryle ou H ;
R⁴² = C₁-C₃₀-n-alkyle, C₁-C₃₀-alkyle ramifié, C₅-C₈-cycloalkyle, C₆-C₁₈-aryle ou C₁-C₃₀-alkylaryle ;
ou un groupe C₅-C₈-alkyle cyclique formé par R⁴¹ et R⁴² ensemble avec l'atome de carbone reliant R⁴¹ et R⁴².

3. Additif pouvant s'écouler selon la revendication 1 ou 2, **caractérisé en ce que** l'aminosilane c) est transformé avec le composé carbonyle d) dans un rapport molaire de 1:0,9 à 0,9:1, de préférence dans un rapport équimolaire.

4. Additif pouvant s'écouler selon l'une quelconque des revendications 1 à 3, **caractérisé en ce que** le composant d'azométhinesilane oligomère activable par Si et le composant d'azométhine B) se trouvent dans un rapport de 20:1 à 4:1.

5. Additif pouvant s'écouler selon l'une quelconque des revendications 1 à 4, **caractérisé en ce que** le composant d'azométhinesilane A) oligomère activable par Si et le composant d'azométhine B) se trouvent en une proportion d'au total > 70% en poids.

6. Additif pouvant s'écouler selon l'une quelconque des revendications 1 à 5, **caractérisé en ce qu'**il existe, par mole d'aminosilane c) utilisé, 0,7 à 0,9 mole d'eau formée de manière intermédiaire pour l'oligomérisation, consommant l'eau en tant que composant de réaction, du composant d'azométhinesilane monomère activable par Si formé de manière intermédiaire.

7. Procédé pour la préparation d'un additif pouvant s'écouler selon l'une quelconque des revendications 1 à 6, **caractérisé en ce que** le composant d'azométhinesilane A) oligomère activable par Si et le composant d'azométhine B) sont préparés ensemble dans un réacteur **en ce que** l'aminosilane c) et un composant d'amine de formule générale
(V) Z-NH₂
où Z = un groupe C₁-C₁₈-n-alkyle, C₅-C₈-cycloalkyle ou C₁-C₁₈-alkyle ramifié, C₁-C₁₈-n-alkyle présentant O et/ou N en tant qu'hétéroatomes, C₅-C₈-cycloalkyle présentant O et/ou N en tant qu'hétéroatomes ou C₁-C₁₈-alkyle ramifié présentant O et/ou N en tant qu'hétéroatomes, substitué par à chaque fois 0 à 3 groupes amino primaires
sont disposés au préalable et transformés avec le composé carbonyle d).

8. Procédé selon la revendication 7, **caractérisé en ce que** la transformation est réalisée en chauffant à 10 jusqu'à 200°C, de préférence à 80-150°C.

9. Procédé selon l'une quelconque des revendications 7 ou 8, **caractérisé en ce qu'**une quantité partielle de l'eau formée de manière intermédiaire lors de la transformation, qui ne doit pas être mise à disposition pour l'oligomérisation, consommant de l'eau en tant que composant de réaction, du composant d'azométhine monomère activable par Si se formant de manière intermédiaire, est éliminée de façon à ce que cette quantité partielle ne participe pas à l'oligomérisation en tant que composant de réaction.

10. Utilisation d'un additif pouvant s'écouler selon l'une quelconque des revendications 1 à 6, en tant que promoteur d'adhérence et réticulant dans les adhésifs et les matériaux d'étanchéité, pour la modification et la réticulation de résines organiques, en tant que liant dans les encres et les peintures, pour le revêtement de fibres de verre et de carbone, en tant que promoteur d'adhérence dans des composés thermoplastiques chargés, pour le traitement de surfaces minérales, organiques et métalliques, pour l'hydrofugation de surfaces, pour la modification de surface de substances pulvérulentes ainsi que pour la silanisation de charges et de pigments.
